# EUROPÄISCHE PATENTSCHRIFT

(11) **EP 1 697 054 B1**
(45) Veröffentlichungstag und Bekanntmachung des Hinweises auf die Patenterteilung: **17.06.2009**
(21) Anmeldenummer: 04803505.9
(22) Anmeldetag: 03.12.2004
(51) Int. Cl.: B04B 1/08, B04B 7/14, H02K 41/03, B41F 27/12

(54) **AUSSENLÄUFERANTRIEB**
EXTERNAL ROTOR DRIVE
DISPOSITIF D'ENTRAINEMENT A ROTOR EXTERIEUR

(30) Priorität: 12.12.2003 DE 10358293
(43) Veröffentlichungstag der Anmeldung: 06.09.2006
(73) Patentinhaber: WIFAG Maschinenfabrik AG, 3014 Bern (CH)
(72) Erfinder: BURRI, Daniel, CH-3510 Konolfingen (CH); FRÖHLICH, Martin, CH-3098 Köniz (CH)
(74) Vertreter: Gassenhuber, Andreas
(86) Internationale Anmeldenummer: PCT/EP2004/013784
(87) Internationale Veröffentlichungsnummer: WO 2005/056195

(56) Entgegenhaltungen:
- EP-A- 0 644 048
- EP-A- 0 738 591
- WO-A-99/55533

## Beschreibung

Die vorliegende Erfindung bezieht sich auf einen drehangetriebenen Rotationskörper für eine Druckmaschine, sowie einen Druckmaschinenantrieb, welcher einen solchen Rotationskörper verwendet.

Übertragungszylinder einer Druckmaschine, wie zum Beispiel Druckzylinder, werden gewöhnlich durch einen Motor angetrieben, welcher zum Beispiel über ein Getriebe mit dem Übertragungszylinder verbunden ist

Aus der DE 195 30 283 A1 ist ein Übertragungszylinder bekannt, welcher einen integrierten Außenläufer-Motor aufweist, wobei der Rotor durch einen hohlen Teil des Übertragungszylinders gebildet wird, auf dessen Innenseite Magneten befestigt sind.

Aus der WO 99/55533 ist ein Zylinder für eine Rotationsdruckmaschine bekannt, wobei ein in die Walze integrierter Motor vorgesehen ist. Dieser Motor besteht aus einem äußeren, in Umfangsrichtung rotierbaren, sowie in axialer Richtung hin- und herbewegbaren hohlzylinderförmigen Läufer. Dieser Läufer trägt an seiner Innenfläche sowohl in Umfangsrichtung, als auch in axialer Richtung, voneinander beabstandete Magnete.

Aus der EP 0 738 591 A1 ist ein Übertragungszylinder mit elektromotorischer Antriebseinheit bekannt, wobei nur auf einer Seite eines Zylinders Permanentmagnete vorgesehen sind.

Es ist eine Aufgabe der Erfindung einen drehangetriebenen Rotationskörper und einen Druckmaschinenantrieb vorzuschlagen, welche zum Antreiben eines oder mehrerer beliebiger Rotationskörper oder Zylinder einer Druckmaschine mit einem ausreichend großen Drehmoment geeignet sind.

Diese Aufgabe wird durch den Rotationskörper und den Druckmaschinenantrieb wie in den unabhängigen Patentansprüchen definiert gelöst. Vorteilhafte Ausführungsformen ergeben sich aus den Unteransprüchen.

Ein erfindungsgemäßer Rotationskörper weist einen elektromotorischen Außenläuferantrieb auf, wobei ein Mantel oder Zylinderelement als Rotor ausgebildet ist und beispielsweise innen hohl ist oder ein Sackloch aufweist und auf seiner Innenseite etwa über den ganzen Bereich der Längsachse einen Permanent-Magneten aufweist, welcher zum Beispiel aus einem Seltenerde-Metall bestehen kann und im Inneren des Rotationskörpers oder Zylinders ein Magnetfeld erzeugt, um zum Beispiel als Permanent-Erregung für einen Wechsel- oder Drehstrommotor zu dienen. Der mit dem Permanent-Magnet verbundene Zylinder oder Rotor ist drehbar auf oder relativ zu einem Stator gelagert, welcher sich in mindestens einem Teilbereich des Zylinders oder Rotors, bevorzugt in dessen Inneren, befindet und sich bevorzugt entlang etwa der gesamten Längsachse des Zylinders erstreckt. Somit kann der Stator gemäß einer Ausführungsform in einem Sackloch des Zylinders vorgesehen sein oder sich auch durch den gesamten Zylinder hindurch erstrecken, wobei der Zylinder in diesem Falle beispielsweise nur aus einem mit Permanent-Magneten verbundenem Mantel besteht. In dem Stator ist mindestens eine Leitung oder Magnetspule so angeordnet, dass, wenn ein Strom durch die Leitung oder Magnetspule fließt, auf den relativ zum Stator drehbar gelagerten Rotor oder Zylinder ein Drehmoment wirkt, welches zum Beispiel den Zylinder antreiben, beschleunigen oder auch abbremsen kann.

Die Erfindung kann prinzipiell bei einzelnen oder allen anzutreibenden Rotationskörpern einer Druckmaschine verwendet werden, wie z.B. bei einem oder mehreren Zentral- oder Stahl-, Drucktuch-, Form- oder Platten-, Gummi-, Messer-, Sammel- und/oder SchneidZylindern, Farb- und/oder Feuchtwalzen und/oder im Falzapparat. Insbesondere kann der Rotationskörper z.B. nach entsprechender Beschichtung oder Bearbeitung der Rotationskörperoberfläche selbst z.B. einen der genannten Zylinder oder Walzen der Druckmaschine bilden oder als Lager oder Träger dafür dienen, wobei z.B. ein zylinderförmiger Walzenkörper auf den Rotationskörper aufgeschoben und z.B. dort fixiert wird.

Der Stator weist bevorzugt mindestens eine elektrische Leitung, insbesondere eine oder mehrere Magnetspulen oder Wicklungen auf, welche so angeordnet sind, dass bei einem Stromfluss durch die Leitungen oder Wicklungen ein Drehmoment auf den mit Permanent-Magneten verbundenen Rotor erzeugt wird. Außenläufermotoren und die Anordnung von Stator-Wicklungen sind im Stand der Technik bekannt. Beispielsweise wird auf die DE 102 13 743 A1 verwiesen. Erfindungsgemäß können ein oder mehrere Stator-Wicklungen entlang der axialen Richtung des Stators so vorgesehen sein, dass über einen Teilbereich, zum Beispiel die halbe Länge des Rotors oder über einen größeren Bereich, bevorzugt über die gesamte Länge des Rotors ein Magnetfeld zum Antreiben des Rotors erzeugt werden kann. Dabei können die Stator-Wicklungen als Wicklungen auf der Außenfläche des Stators so vorgesehen sein, dass sie als Elektromagnet wirken, welche mit Dauer- oder Permanentmagneten z.B. in oder auf einer Innenoberfläche des Rotors oder der Rotorhülse zusammenwirken, um eine die Drehung des Rotors beeinflussende Beschleunigung- oder Bremskraft erzeugen zu können.

Wie oben beschrieben kann der Rotor oder Zylinder entweder unmittelbar an oder auf dem Stator zum Beispiel über ein oder mehrere Kugellager drehbar gelagert oder befestigt werden.

Es ist auch möglich, dass der Rotor nicht direkt an dem Stator befestigt wird und an einer externen Wandung oder einem Gehäuse, zum Beispiel an der Seitenwand einer Druckmaschine, so angebracht ist, dass er drehbar gelagert ist. Beispielsweise kann der Rotor auch auf einer Seite über ein Kugellager mit dem Stator verbunden sein und auf einer gegenüberliegenden Seite über ein Kugellager mit einer externen Halterung, wie zum Beispiel einer Seitenwand einer Druckmaschine verbunden sein.

Weiterhin ist es möglich, dass der Stator kraft- und/oder formschlüssig mit einer Halterung wie z.B. einer Druckgestellwand verbunden ist. Erfindungsgemäß kann somit für den Antrieb von Druckmaschinen-Walzen und/oder -Zylindern ein vorgefertigter Walzenmotor, insbesondere ein Außenläufer-Motor, verwendet werden, wobei der Motor z.B. komplett vorgefertigt sein kann, also den Rotor und den Stator aufweist, wobei die Rotorhülse auf der inneren Fläche Dauermagnete und der Stator auf der Außenfläche Wicklungen als Elektromagnete aufweist. Die Rotorhülse kann einen Außendurchmesser oder ein Profil aufweisen, der bzw. das z.B. der Ausnehmung oder dem Innendurchmesser bzw. Profil in einem Druckzylinder oder in einer Walze entspricht, wobei zur Erzielung eines guten Reibschlusses zwischen Rotorhülse und Druckzylinder oder Walze die ineinander greifenden Oberflächen vorzugsweise leicht konisch ausgebildet sein können. Zum Beispiel kann die Außenläufer-Außenfläche konisch ausgebildet sein.

Vorteilhaft ist die Statorlänge so bemessen, dass diese nicht über das Zwischenwandmaß der parallel gegenseitig beabstandeten Lagerorte oder -wände, insbesondere der Druckgestellwände, hinausgeht.

Somit können Druckwerkzylinder und/oder Walzen mit einem vormontierten Außenläufermotor einfach zwischen parallel beabstandete Druckwerkswände montiert werden oder von diesen demontiert werden. Weiterhin können verschiedene Druckformat-Abschnitte in einem Motorenleistungsbereich zusammengefasst werden, in dem z.B. der Rotorhülsendurchmesser mit unterschiedlichen Abmessungen ausgebildet wird.

Erfindungsgemäß kann der aus Stator und Rotor bestehende Rotationskörper als magnetisch abgeschlossenes System ausgebildet sein und somit nach außen magnetisch unwirksam sein, so dass magnetische Einwirkungen auf benachbarte metallische Gegenstände verhindert werden. Dabei kann z.B. die Wandstärke an einem Druckwerkzylinder oder einer Druckwerkwalze so gewählt werden, dass der Rotationskörper oder Motor magnetisch abgeschlossen ist.

Bevorzugt ist am Stator und besonders bevorzugt mit dem Stator verbunden oder im Stator eine Kühlung vorgesehen. Es kann zum Beispiel ein Kühlmedium, wie zum Beispiel eine Kühlflüssigkeit, insbesondere Kühlwasser, durch einen Teilbereich oder auch durch den gesamten Stator, also beispielsweise über die gesamte Länge des Stators, geleitet werden, um eine im Stator entstehende Abwärme zum Beispiel von den Stator-Wicklungen ableiten zu können. Ebenso können andere Kühlelemente oder Kühlmechanismen verwendet werden, wie zum Beispiel die Kühlung eines Außen- oder Randbereiches des Stators, welche auch eine ausreichende Kühlung von Bereichen oder Bauelementen des Stators bewirken kann, wenn der Stator aus einem wärmeleitfähigen Material, wie zum Beispiel Eisen, hergestellt ist.

Ergänzend oder alternativ kann eine Kühlung auch durch einen Luftstrom erfolgen, welcher über sich erwärmende Bauelemente, wie zum Beispiel eine Stator-Wicklung, geleitet wird. Vorteilhaft kann ein Luftstrom auch durch eine Drehung des Zylinders oder Rotors erzeugt werden, wobei beispielsweise auf der Innenseite des Rotors Elemente oder Schaufelräder angebracht sind, welche einen Luftstrom etwa in axialer Richtung bei einer Drehung des Rotors erzeugen können.

Das Anbringen von Leitungen für Strom und/oder ein Kühlmedium in dem Stator ist relativ einfach, da sich der Stator relativ zu seinem Anbringungsort nicht bewegt und somit kann zum Beispiel auf Schleifkontakte oder ähnliches verzichtet werden.

Besonders bevorzugt erstrecken sich die elektrischen Leitungen oder Magnetspulen, welche als Stator-Wicklungen verwendet werden und/oder ein Kühlsystem, also zum Beispiel Leitungen für ein Kühlmedium, etwa über die gesamte Länge des Stators, wobei beispielsweise mehrere Stator-Wicklungen axial beabstandet von einem ersten Ende verteilt bis zu einem zweiten Ende des Stators vorgesehen sein können. Dies ermöglicht es, dass der Antrieb des Rotors oder Zylinders über die gesamte Länge des Rotors oder Stators, welche vorteilhaft etwa gleich lang sind, erfolgen kann, so dass im Vergleich zu einem Antrieb, welcher nur in einem Teilbereich des Rotors vorgesehen ist, ein größeres Drehmoment bzw. eine größere Antriebskraft erzeugt werden kann.

Das Magnetelement, welches mit dem Rotor verbunden ist, ist vorzugsweise im Bereich der oder an der Innenseite des Rotors vorgesehen und kann zum Beispiel ringförmig ausgebildet sein.

Der erfindungsgemäße Rotationskörper kann beispielsweise verwendet werden in Verbindung mit oder auch als ein Gummituchzylinder, ein Plattenzylinder, ein Umlenkzylinder, eine Zugwalze, ein Duktor oder ein Rollenwechsler.

Somit ermöglicht die Erfindung die Herstellung von Walzen mit stillstehenden Wellenzapfen, was den Ein- und Ausbau von Walzen erheblich vereinfacht. Ebenso ist der Antrieb einer solchen Walze vorteilhaft, da der Walzenmantel eine relativ zu einer massiv ausgebildeten Walze kleinere Masse und somit eine kleinere Massenträgheit haben kann.

Gemäß einem weiteren Aspekt bezieht sich die Erfindung auf einen Druckmaschinenantrieb, welcher einen solchen Rotationskörper verwendet.

Bevorzugt ist bei einem solchen Druckmaschinenantrieb ein Steuergerät zur Steuerung des in Leitungen oder Wicklungen des Rotors fließenden Stromes vorgesehen. Beispielsweise kann das Steuergerät die Frequenz, die Spannung und/oder die Stromstärke steuern, um somit beispielsweise die Drehzahl des Rotors zu regeln und in Abhängigkeit von vorgegebenen Druckzuständen oder Druckbedingungen eine Beschleunigung, einen Gleichlauf oder ein Abbremsen des Rotors zu bewirken.

Vorzugsweise kann ein Sensor vorgesehen sein, mit welchem eine Winkelposition des Rotors erfasst wird, um z.B. in Verbindung mit einem wie oben beschriebenen Steuergerät einen Regelkreis zu bilden, wobei zur Gleichlaufsteuerung mehrerer Druckzylinder untereinander auch einzelne Winkelpositionen von verschiedenen Rotoren erfasst und die Ansteuerung der Statorwicklungen in Abhängigkeit von den erfassten Winkelpositionen und gegebenenfalls in Abhängigkeit von vorgegebenen Sollwerten so angesteuert oder geregelt werden, dass z.B. eine Frequenz, Spannung und/oder Stromstärke an die Statorwicklungen angelegt wird, um den Gleichlauf mehrerer Druckzylinder zu halten oder wieder herzustellen.

Besonders bevorzugt wird der erfindungsgemäß drehangetriebene Rotationskörper als Antriebsmotor einer Zylindergruppe verwendet, welche aus einem mechanisch gekoppelten Plattenzylinder und einem Gummituchzylinder besteht. Insbesondere wird der erfindungsgemäße Rotationskörper als Gummituchzylinder oder als Plattenzylinder bei einem solchen paarweisen Antrieb verwendet, wobei mindestens ein erfindungsgemäßer Rotationskörper in einer solchen Zylindergruppe vorgesehen ist und vorzugsweise mehrere Zylindergruppen von mehreren solcher Rotationskörper angetrieben werden. Es wird auf die EP 0 644 048 der Anmelderin verwiesen, die eine paarweise Bildung von Zylindergruppen durch einen Gummituchzylinder und einen Plattenzylinder einer Rotationsmaschine und den gemeinsamen Antrieb einer solchen Zylindergruppe durch einen eigenen Antriebsmotor pro Zylindergruppe, sowie die Verwendung von Zahnriemen und eine allgemeine Auslegung von Druckmaschinenangetrieben zeigt. Durch die Verwendung eines erfindungsgemäßen drehangetriebenen Rotationskörpers kann somit bei der in der EP 0 644 048 beschriebenen Anordnung ein separater Motor zum Antreiben eines Gummituchzylinder oder eines mit diesem gekoppelten Plattenzylinders entfallen, da der Gummituchzylinder oder der Plattenzylinder selbst als erfindungsgemäßer, drehangetriebener Rotationskörper ausgebildet sind.

Es zeigen:
- Figur 1: einen Rotationskörper mit zwei Varianten eines Außenläuferantriebs;
- Figur 2: ein Ausführungsbeispiel eines axial verschiebbaren Außenläufermotors;
- Figur 3: eine Ausführungsform eines axial nicht verschiebbaren Außenläufermotors; und
- Figuren 4a und 4b: Prinzipschaubilder von Walzen oder Zylindern, welche von einem oder zwei Rotationskörpern angetrieben werden.

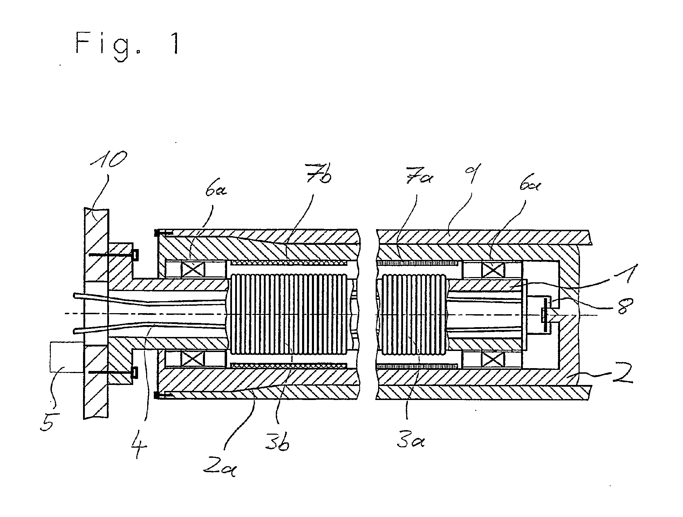

Figur 1 zeigt einen Stator 1 eines Walzenkörpers oder Plattenzylinders 9, welcher jeweils seitlich in einer Halterung 10 fest und nicht drehend gelagert ist. Die Halterung 10 kann zum Beispiel die Außenwand einer Druckmaschine sein. Im Inneren des Stators 1 sind Stator-Wicklungen 3a, 3b und ein Kreislauf 4 für ein Kühlmedium vorgesehen, um eine in dem Stator 1 zum Beispiel durch einen Stromfluss durch die Stator-Wicklungen 3a, 3b entstehende Abwärme ableiten zu können. Die Stator-Wicklungen 3a, 3b sind über ein dreiphasiges Motorkabel mit einer Frequenz-Steuereinheit 5 verbunden, welche außerhalb des Stators 1 und bevorzugt außerhalb der Druckmaschine zum Beispiel an der Außenwand 10 der Druckmaschine vorgesehen ist.

Auf der Umfangsseite des Stators 1 ist jeweils an dem Ende des Stators 1 ein bevorzugt axial verschiebbares Kugellager 6a vorgesehen, auf welchem der Rotor 2 gelagert ist, so dass sich der Rotor 2 relativ zum Stator 1 drehen kann. Auf der Innenseite des Rotors 2 sind in den zwei gezeigten Ausführungsformen Permanent-Magnete 7a, 7b angebracht, welche ein für einen Außenläufermotor erforderliches Magnetfeld erzeugen. Der Rotor 2 wird in der gezeigten Ausführungsform mit einem darauf aufgesetzten oder aufgeschobenen Walzenkörper 9, der durch einen konischen oder kegelstumpfförmigen Bereich 2a des Rotors 2 kraft-, reib- oder formschlüssig gehalten wird, als Plattenzylinder verwendet.

Neben dem in Figur 1 beispielhaft gezeigten Plattenzylinder kann ein Gummituchzylinder angeordnet sein, welcher entweder mechanisch mit dem Plattenzylinder gekoppelt ist und somit von diesem angetrieben wird oder welcher ebenfalls als drehangetriebener Rotationskörper mit den oben beschriebenen Elementen 1 bis 7 des Plattenzylinders mit aufgesetztem Gummituchzylinder 9 ausgebildet sein kann.

Ein Winkelmessgerät oder Geber 8 misst die momentane Lage oder Drehposition bzw. den Drehwinkel des Rotors 2 und damit des mit dem Rotor 2 fest verbundenen Walzenkörpers 9 und kann die erfassten Drehpositionssignale an die Frequenzsteuereinheit 5 ausgeben, welche z.B. zusammen mit Gebern und/oder Steuereinheiten von anderen Rotationskörpern oder Walzen Steuersignale oder Ströme an die Statorwicklungen 3a, 3b so abgeben kann, dass ein Gleichlauf mehrer Walzen realisiert werden kann.

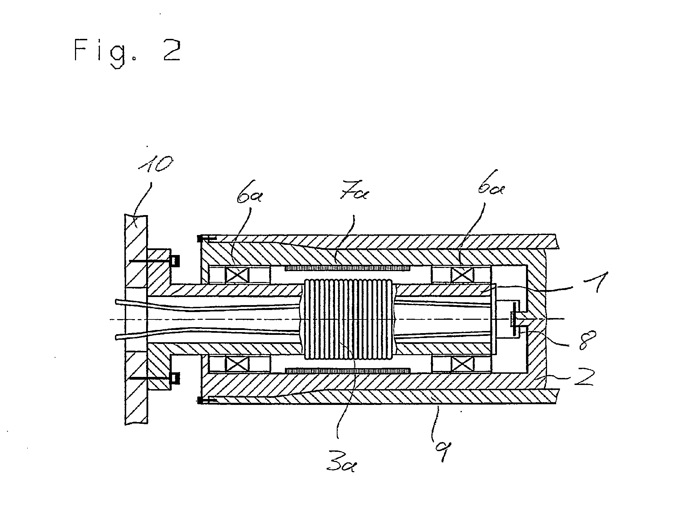

Figur 2 zeigt eine Ausführungsform eines axial verschiebbaren Außenläufermotors, auf welchem ein Walzenkörper 9 wie in Figur 1 gezeigt aufgesetzt ist. Die Lager 6a zur drehbeweglichen Lagerung des Rotors 2 auf dem Stator 1 sind in axialer Richtung des Stators 1 verschiebbar oder mit dem Stator 1 verbunden und ermöglichen eine axiale Verschiebung des Rotors 2 relativ zum Stator 1, wobei sich die Permanentmagnete 7a, welche an der Innenseite des Rotors 2 angebracht sind, in axialer Richtung weiter erstrecken bzw. über eine größere Länge vorgesehen sind als die Länge der Statorwicklung 3a in axialer Richtung, wodurch es möglich wird, dass auch bei einer Axialverschiebung des Rotors 2 relativ zum Stator 1 innerhalb eines vorgegebenen Bereichs ein im Wesentlichen gleiches Magnetfeld von den mit dem Rotor 2 verbundenen Permanentmagneten 7a erzeugt wird, um in Verbindung mit dem von den Statorwicklungen 3a beim Stromdurchfluss erzeugten elektromagnetischen Feld eine Antriebs- oder Bremskraft auf den Rotor 2 auszuüben.

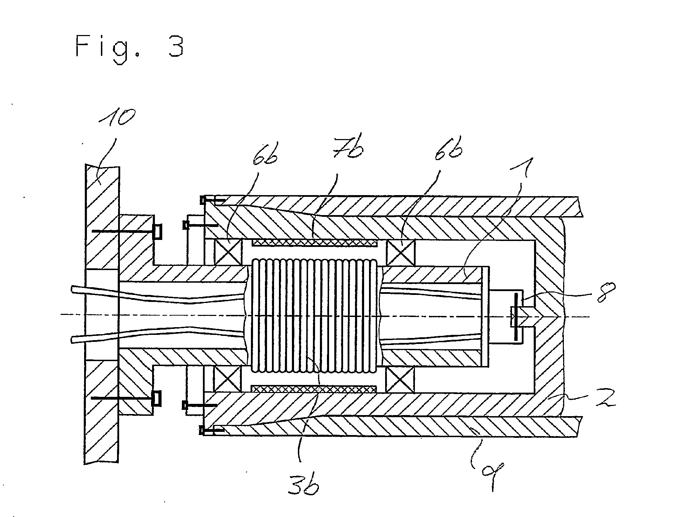

Figur 3 zeigt eine weitere Ausführungsform eines Rotationskörpers, welche Kugellager 6b aufweist, die keine axiale Verschiebung des Rotors 2 relativ zum Stator 1 ermöglichen. Somit kann die radiale Erstreckung bzw. Länge der Permanentmagnete 7b in radialer Richtung in etwa der Länge der Rotorwicklung 3b in radialer Richtung entsprechen, ohne dass es während des Betriebs des Außenläufermotors zu einer signifikanten Veränderung der zur Erzeugung einer Rotations- oder Drehkraft erforderlichen magnetischen Kopplung zwischen den Permanentmagneten 7b und der Statorwicklung 3b kommen würde.

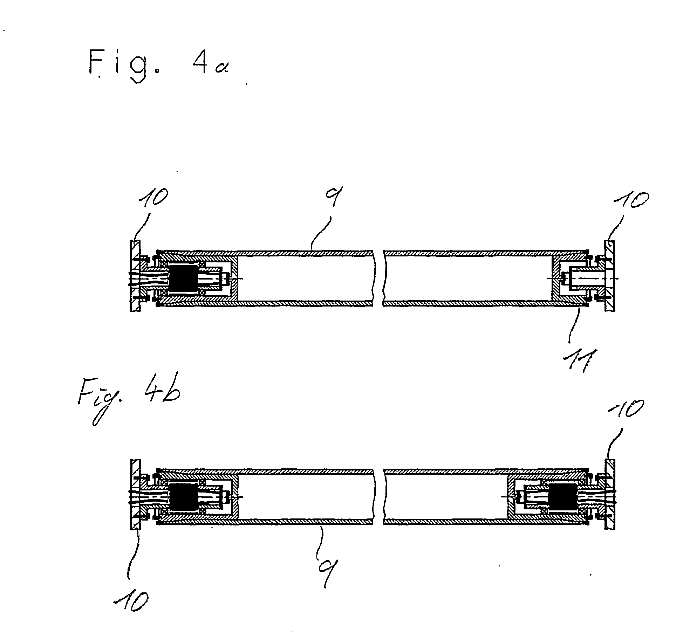

Figur 4a zeigt eine Ausführungsform einer von einem Außenläufermotor angetriebenen Walze oder eines angetriebenen Zylinders 9, wobei auf nur einer, in Figur 4a linken, Seite der Walze oder des Zylinders 9 ein wie oben beschriebener Außenläufermotor z.B. nur seitlich in die Walze oder den Zylinder 9 eingeschoben ist und die Walze bzw. der Zylinder 9 an dem gegenüberliegenden Ende durch einen konventionellen Wellenzapfen 11 gelagert ist. Der in Figur 4a schematisch gezeigte Motor kann z.B. nur seitlich in die Walze oder den Zylinder eingeschoben sein oder sich über größere Bereiche der axialen Länge der Walze bzw. des Zylinders 9 erstrecken, wie z.B. bis zur Hälfte oder darüber hinaus oder sogar über die gesamte axiale Länge der Walze bzw. des Zylinders 9.

Figur 4b zeigt eine weitere Ausführungsform, wobei im Gegensatz zum in Figur 4a gezeigten Beispiel an beiden Enden der Walze bzw. des Zylinders 9 ein wie oben beschriebener Außenläufermotor vorgesehen ist.

Allgemein kann der in den Figuren 4a und 4b gezeigte Motor jeder der unter Bezugnahme auf die Figuren 1 bis 3 beschriebenen Motoren sein.

## Patentansprüche

1. Rotationskörper für eine Druckmaschine mit einem Stator (1) und einem Rotor (2), welcher relativ zum Stator (1) drehbar ist und mindestens einen Permanent-Magneten (7) aufweist, wobei im Stator (1) mindestens eine Stator-Wicklung (3) so vorgesehen ist, dass bei Stromfluss durch die Stator-Wicklung (3) in Wechselwirkung mit dem mindestens einen Permanent-Magneten (7) des Rotors (2) ein auf den Rotor (2) wirkendes Drehmoment erzeugt werden kann, **dadurch gekennzeichnet, dass** über etwa den ganzen Bereich der Längsachse des Rotors (2) ein Permanent-Magnetelement (7) vorgesehen ist

2. Rotationskörper nach Anspruch 1, wobei mindestens zwei Stator-Wicklungen (3) an axial versetzten Stellen des Stators (1) vorgesehen sind.

3. Rotationskörper nach Anspruch 1, mit einer oder mehr Stator-Wicklungen (3), welche so bei dem Stator (1) vorgesehen sind, dass über mindestens die halbe Länge des Rotors (2) ein magnetisches Feld zum Antreiben des Rotors (2) erzeugt werden kann.

4. Rotationskörper nach Anspruch 1, wobei eine oder mehrere Stator-Wicklungen (3) verteilt etwa über die gesamte Länge des Stators (1) vorgesehen sind.

5. Rotationskörper nach einem der vorhergehenden Ansprüche, wobei eine oder mehrere Stator-Wicklungen (3) an der Außenfläche des Stators (1) vorgesehen sind.

6. Rotationskörper nach einem der vorhergehenden Ansprüche, wobei der Rotor (2) ein Zylindermantel ist.

7. Rotationskörper nach einem der Ansprüche 1 bis 5, wobei der Rotor (2) ein Zylinderkörper mit einem Sackloch ist.

8. Rotationskörper nach einem der vorhergehenden Ansprüche, wobei der Rotor (2) mit einem Lager (6a, 6b) auf dem Stator (1) und/oder an einer externen Halterung (10) befestigt ist.

9. Rotationskörper nach einem der vorhergehenden Ansprüche mit einem Zylinder- oder Walzenkörper (9), der auf dem Rotor (2) gelagert und insbesondere durch Kraft-, Reib- und/oder Formschluss fixiert ist.

10. Rotationskörper nach einem der vorhergehenden Ansprüche mit einem Kühlsystem (4) zur Kühlung mindestens eines Teilbereiches des Stators (1).

11. Rotationskörper nach einem der vorhergehenden Ansprüche, wobei der mit dem Rotor (2) verbundene Permanent-Magnet (7) ringförmig und/oder stabförmig ist und/oder auf der Rotorhülsen-Innenfläche vorgesehen ist.

12. Rotationskörper nach einem der vorhergehenden Ansprüche, wobei der Rotor (2) ein Umlenkzylinder, eine Zugwalze, ein Duktor, Zentral- oder Stahl-, Drucktuch-, Form- oder Platten-, Gummi-, Messer-, Sammel- und/oder Schneid-Zylinder, eine Farb- und/oder Feuchtwalze ist und/oder im Falzapparat oder im Rollenwechsler verwendet wird.

13. Druckmaschinenantrieb mit einem Rotationskörper nach einem der vorhergehenden Ansprüche.

14. Druckmaschinenantrieb nach dem vorhergehenden Anspruch mit einem Steuergerät (5) zur Steuerung der Spannung, der Stromstärke und/oder der Frequenz eines in mindestens einer Stator-Wicklung (3) fließenden Stromes und/oder mit einem Winkelsensor (8) zur Messung der Drehlage des Rotors (2).

15. Rotationsdruckmaschine mit Gummituchzylindern und Gegendruckzylindern dazu zum Bilden von Druckstellen und mit Plattenzylindern (2), die mit den Gummituchzylindern paarweise durch mechanische Kopplung für ihren Antrieb zu Zylindergruppen zusammengefasst sind, wobei jeweils eine Zylindergruppe von einem als Rotationskörper nach einem der Ansprüche 1 bis 12 ausgebildeten Plattenzylinder und/oder Gummituchzylinder angetrieben werden und/oder der Gegendruckzylinder von einem anderen Antriebsmotor angetrieben wird oder als Rotationskörper nach einem der Ansprüche 1 bis 12 ausgebildet ist.

16. Verwendung eines Rotationskörpers nach einem der Ansprüche 1 bis 12 als Lager für einen Zylinder oder eine Walze (9) einer Druckmaschine.

## Claims

1. A rotation body for a printing machine, comprising a stator (1) and a rotor (2) which can be rotated relative to the stator (1) and comprises at least one permanent magnet (7), wherein at least one stator winding (3) is provided in the stator (1) such that, when current flows through the stator winding (3), a torque acting on the rotor (2) can be generated in interaction with the at least one permanent magnet (7) of the rotor (2), **characterised in that** a permanent magnetic element (7) is provided over approximately the whole area of the longitudinal axis of the rotor (2).

2. The rotation body according to claim 1, wherein at least two stator windings (3) are provided at axially offset points on the stator (1).

3. The rotation body according to claim 1, comprising one or more stator windings (3) which are provided to the stator (1) such that a magnetic field for driving the rotor (2) can be generated over at least half the length of the rotor (2).

4. The rotation body according to claim 1, wherein one or more stator windings (3) are provided, distributed approximately over the entire length of the stator (1).

5. The rotation body according to any one of the preceding claims, wherein one or more stator windings (3) are provided on the outer surface of the stator (1).

6. The rotation body according to any one of the preceding claims, wherein the rotor (2) is a cylinder shell.

7. The rotation body according to any one of claims 1 to 5, wherein the rotor (2) is a cylinder body comprising a blind hole.

8. The rotation body according to any one of the preceding claims, wherein the rotor (2) is mounted on the stator (1) and/or on an external retainer (10) by a bearing (6a, 6b).

9. The rotation body according to any one of the preceding claims, comprising a cylinder body or roller body (9) which is supported on the rotor (2) and in particular fixed by a non-positive, frictional and/or positive lock.

10. The rotation body according to any one of the preceding claims, comprising a cooling system (4) for cooling at least a partial area of the stator (1).

11. The rotation body according to any one of the preceding claims, wherein the permanent magnet (7) connected to the rotor (2) is annular and/or rod-shaped and/or is provided on the rotor casing inner surface.

12. The rotation body according to any one of the preceding claims, wherein the rotor (2) is a deflecting cylinder, a drawing roller, a ductor, a central cylinder or steel cylinder, a printing blanket cylinder, a form cylinder or plate cylinder, a rubber cylinder, a knife cylinder, a collecting cylinder and/or a cutting cylinder, an inking roller and/or dampening roller and/or is used in the folding apparatus or in the reel changer.

13. A printing machine drive, comprising a rotation body according to any one of the preceding claims.

14. The printing machine drive according to the preceding claim, comprising a control device (5) for controlling the voltage, the strength of the current and/or the frequency of a current flowing in at least one stator winding (3) and/or comprising an angle sensor (8) for measuring the rotary position of the rotor (2).

15. A rotation printing machine, comprising rubber blanket cylinders and counter printing cylinders thereto for forming printing points, and comprising plate cylinders (2) which are combined in pairs with the rubber blanket cylinders into cylinder groupings by a mechanical coupling for driving them, wherein each cylinder grouping is driven by a plate cylinder and/or rubber blanket cylinder designed as a rotation body according to any one of claims 1 to 12 and/or the counter printing cylinder is driven by another driving motor or is designed as a rotation body according to any one of claims 1 to 12.

16. The use of a rotation body according to any one of claims 1 to 12 as a bearing for a cylinder or a roller (9) of a printing machine.

## Revendications

1. Corps de révolution pour une machine à imprimer, comprenant un stator (1) et un rotor (2) qui peut tourner par rapport au stator (1) et qui a au moins un aimant (7) permanent, dans lequel il est prévu dans le stator (1) au moins un enroulement (3) statorique qui, pour un flux de courant passant dans l'enroulement (3) statorique, peut, en interaction avec le au moins un aimant (7) permanent du rotor, produire un couple de rotation agissant sur le rotor (2), **caractérisé en ce qu'**il est prévu un élément (7) d'aimant permanent à peu près sur toute la partie de l'axe longitudinal du rotor (2).

2. Corps de révolution suivant la revendication 1, dans lequel il est prévu au moins deux enroulements (3) statoriques en des emplacements du stator (1) décalés axialement.

3. Corps de révolution suivant la revendication 1, comprenant un ou plusieurs enroulements (3) statoriques qui sont prévus pour le stator (1) de façon à pouvoir produire sur au moins la moitié de la longueur du rotor (2) un champ magnétique pour l'entraînement du rotor (2).

4. Corps de révolution suivant la revendication 1, dans lequel il est prévu un ou plusieurs enroulements (3) statoriques répartis à peu près sur toute la longueur du stator (1).

5. Corps de révolution suivant l'une des revendications précédentes, dans lequel il est prévu un ou plusieurs enroulements (3) statoriques sur la surface extérieure du stator (1).

6. Corps de révolution suivant l'une des revendications précédentes, dans lequel le rotor (2) a une surface latérale cylindrique.

7. Corps de révolution suivant l'une des revendications 1 à 5, dans lequel le rotor (2) est un corps cylindrique ayant un trou borgne.

8. Corps de révolution suivant l'une des revendications précédentes, dans lequel le rotor (2) est fixé par un palier (6a, 6b) sur le stator (1) et/ou sur une fixation (10) extérieure.

9. Corps de révolution suivant l'une des revendications précédentes, comprenant un corps (9) cylindrique ou un corps de rouleau, qui est monté sur le rotor (2) et qui est immobilisé notamment par complémentarité de force, de frottement et/ou de forme.

10. Corps de révolution suivant l'une des revendications précédentes, comprenant un système (4) de refroidissement pour refroidir au moins une région partielle du stator (1).

11. Corps de révolution suivant l'une des revendications précédentes, dans lequel l'aimant (7) permanent relié au rotor (2) est annulaire et/ou en forme de barreau et/ou est prévu sur la surface intérieure de l'enveloppe du rotor.

12. Corps de révolution suivant l'une des revendications précédentes, dans lequel le rotor (2) est un cylindre de renvoi, un rouleau de traction, un rouleau d'encrier, un rouleau central ou un rouleau d'acier, un blanchet, un cylindre gravé ou une plaque gravée, un cylindre presseur, un cylindre couteau, un cylindre collecteur et/ou un cylindre de coupe, un rouleau d'encrage et/ou un rouleau d'humidification et/ou est utilisé dans la plieuse ou dans le changement de bobine.

13. Entraînement de machine à imprimer ayant un corps de révolution suivant l'une des revendications précédentes.

14. Entraînement de machine à imprimer suivant la revendication précédente, comprenant un appareil (5) de commande pour commander la tension, l'intensité du courant et/ou la fréquence d'un courant passant dans au moins un enroulement (3) statorique et/ou ayant un capteur (8) d'angle pour la mesure de la position en rotation du rotor (2).

15. Presse rotative ayant des cylindres de blanchet et des cylindres de contre-pression pour former des emplacements d'impression et des cylindres (2) de plaque qui sont rassemblés avec les cylindres de blanchet, par paire, par accouplement mécanique pour leur entraînement en des groupes de cylindres, dans lequel respectivement un groupe de cylindres est entraîné par un cylindre de plaque et/ou par un cylindre de blanchet constitué en corps de révolution suivant l'une des revendications 1 à 12 et/ou le cylindre de contre-pression est entraîné par un autre moteur d'entraînement ou est constitué en corps de révolution suivant l'une des revendications 1 à 12.

16. Utilisation d'un corps de révolution suivant l'une des revendications 1 à 12 comme palier pour un cylindre ou un rouleau (9) d'une machine à imprimer.
